# EUROPEAN PATENT SPECIFICATION

(11) **EP 2 453 549 B1**
(45) Date of publication and mention of the grant of the patent: **28.12.2016**
(21) Application number: 10191046.1
(22) Date of filing: 12.11.2010
(51) Int. Cl.: H02K 1/27, H02K 21/24

(54) **A permanent magnet rotor for an axial flux electrical machine of a mobile working machine**
Permanentmagnetrotor für eine elektrische Axialflussmaschine einer mobilen Arbeitsmaschine
Rotor à aimant permanent pour machine électrique à flux axial d'une machine de travail mobile

(43) Date of publication of application: 16.05.2012
(73) Proprietor: Visedo Oy, 53850 Lappeenranta (FI)
(72) Inventor: Pyrhönen, Juha, Jaakko, 53850 Lappeenranta (FI); Valtonen, Mikko Nestor, 45100 Kouvola (FI); Naumanen, Ville Juhani, 54410 Ylämaa (FI); Rauma, Kimmo Tapio, 53850 Lappeenranta (FI)
(74) Representative: Berggren Oy Ab

(56) References cited:
- EP-A1- 2 043 231
- EP-A1- 2 066 004
- EP-A2- 1 612 913
- WO-A1-2008/142519
- JP-A- 60 128 853
- US-A1- 2009 295 246

## Description

### Field of the invention

The invention relates generally to rotating electrical machines. More particularly, the invention relates to a permanent magnet rotor for an axial flux electrical machine of a mobile working machine. Furthermore, the invention relates to an axial flux electrical machine for a mobile working machine. Furthermore, the invention relates to a mobile working machine.

### Background

Rotating electrical machines, such as motors and generators, generally comprise a rotor and a stator which are arranged such that a magnetic flux is developed between these two. In a permanent magnet ("PM") electrical machine, a number of permanent magnets are usually mounted on the rotor, while the stator is provided with stator windings. The permanent magnets and electrical currents in the stator windings cause a magnetic flux to flow across the air gap between the rotor and the stator.

An axial flux electrical machine is advantageous especially in applications in which the axial length of the electrical machine should be as small as possible. A permanent magnet rotor of an axial flux electrical machine comprises typically a shaft, a body connected to the shaft, and permanent magnet pole-modules each of which being attached to the body and having an axis of magnetization in an axial direction parallel to the shaft. The stator of the axial flux electrical machine comprises typically, but not necessarily, two stator elements that are opposed to each other with the permanent magnet rotor interposed therebetween. Each coil of the stator winding has a magnetic axis directed axially parallel to the shaft of the permanent magnet rotor.

In order to minimize the hysteresis and eddy current losses in the permanent magnets of the rotor, the stator should produce as little as possible such components of the air-gap magnetic flux distribution which do not travel at the synchronous speed, i.e. at the speed of the air-gap surface of the rotor. As commonly known, the above-mentioned harmful components of the air-gap magnetic flux distribution are attempted to be minimized by using stator windings which are distributed into a plurality of stator slots per pole per phase. A stator having distributed stator windings of the kind mentioned above is however more complex and expensive to manufacture than a stator having simple concentrated stator windings where each coil is located around a salient stator pole.

Publication EP2066004 discloses an axial flux electrical machine that comprises a rotating shaft, a permanent magnet rotor fixed to the rotating shaft, and first and second stators facing each other on both sides in the axial direction of the motor with a gap in between. The first and second stators respectively have back yokes, teeth circumferentially arranged on the gap sides of the back yokes, and coils wound around the teeth. The body structure of the rotor is electrically nonconducting material and iron layers are provided on the surfaces of the permanent magnets so as to make the rotor resistant to demagnetization. The permanent magnets are located in the middle of the rotor structure when seen in the axial direction. Therefore, hot spots of the rotor tend to be formed in the permanent magnets which, on the other hand, are most vulnerable to temperature.

Publication EP2043231 discloses an axial flux electrical machine whose rotor comprises a body structure made of non-magnetic material and magnetic pole modules each comprising magnetic plates and a permanent magnet sandwiched so that the permanent magnet is between the magnetic plates. The magnetic plates are capable of protecting the permanent magnet from demagnetization. The permanent magnets are located in the middle of the rotor structure when seen in the axial direction. Therefore, hot spots of the rotor tend to be formed in the permanent magnets which, on the other hand, are most vulnerable to temperature.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention, there is provided a new permanent magnet rotor for an axial flux electrical machine of a mobile working machine. The permanent magnet rotor comprises:
- a shaft,
- a body made of electrically non-conductive material and connected to the shaft, and
- permanent magnet pole-modules each of which being attached to the body, having an axis of magnetization in an axial direction parallel to the shaft, and comprising, at least in outmost regions in the axial direction, structures consisting of parts that are electrically insulated from each other so as to reduce eddy currents in the outmost regions in the axial direction,
wherein each of the permanent magnet pole-modules comprises a first block made of permanent magnet material, a ferromagnetic center block, and a second block made of permanent magnet material sandwiched in the axial direction so that the ferromagnetic center block is between the first and second blocks.

In a permanent magnet rotor according to an advantageous embodiment of the invention, each of the permanent magnet pole-modules comprises a first ferromagnetic layer, a permanent magnet core-part, and a second ferromagnetic layer sandwiched in the axial direction so that the permanent magnet core-part is between the first and second ferromagnetic layers, and the first and second ferromagnetic layers comprise ferromagnetic parts that are electrically insulated from each other. In this case, the first and the second ferromagnetic layers represent the structures consisting of parts that are electrically insulated from each other.

The above-described permanent magnet rotor is suitable for an axial flux electrical machine which includes concentrated stator windings so that each stator coil is located around a salient pole of a stator core. The salient poles of the stator cause relatively strong harmonics to the magnetic flux density distribution in the air-gap, but the losses caused by these harmonics are reduced because the body of the rotor is made of electrically non-conductive material and because, from the viewpoint of the harmonics, the permanents magnets are located behind the first and second ferromagnetic layers made of parts that are electrically insulated from each other. The first and second ferromagnetic layers can be, for example, stacks of insulated steel sheets which are stacked in a direction perpendicular to the shaft of the permanent magnet rotor, or the first and second ferromagnetic layers can be made of, for example, ferrite, or block of iron powder composite.

In a permanent magnet rotor according to another embodiment of the invention, permanent magnets of the permanent magnet pole-modules are composed of electrically insulated pieces of permanent magnet material stacked in a direction perpendicular to the shaft. In this case, the permanent magnets represent the structures consisting of parts that are electrically insulated from each other. Also a permanent magnet rotor of this kind is suitable for an axial flux electrical machine which includes concentrated stator windings so that each stator coil is located around a salient pole of a stator core, because permanent magnets composed of electrically insulated pieces of permanent magnet material are not so vulnerable to air-gap flux harmonics as monolithic permanent magnets.

In accordance with the second aspect of the invention, there is provided a new axial flux electrical machine for a mobile working machine. The axial flux electrical machine comprises:
- a permanent magnet rotor comprising a shaft, a body made of electrically non-conductive material and connected to the shaft, and permanent magnet pole-modules each of which being attached to the body and having an axis of magnetization in an axial direction parallel to the shaft, and
- a stator having a stator core and concentrated stator windings each coil of which being located around a stator pole and having a magnetic axis directed axially parallel to the shaft of the permanent magnet rotor,
wherein the permanent magnet pole-modules comprise, at least in their outmost regions in the axial direction, structures consisting of parts that are electrically insulated from each other so as to reduce eddy currents in the outmost regions in the axial direction, and each of the permanent magnet pole-modules comprises a first block made of permanent magnet material, a ferromagnetic center block, and a second block made of permanent magnet material sandwiched in the axial direction so that the ferromagnetic center block is between the first and second blocks.

In accordance with the third aspect of the invention, there is provided a new mobile working machine. The mobile working machine comprises:
- a combustion engine, and
- an electromechanical power transmission chain between the combustion engine and one or more wheels of the mobile working machine,
wherein the electromechanical transmission chain comprises at least one axial flux electrical machine that comprises:
- a permanent magnet rotor comprising a shaft, a body made of electrically non-conductive material and connected to the shaft, and permanent magnet pole-modules each of which being attached to the body and having an axis of magnetization in an axial direction parallel to the shaft, and
- a stator having concentrated stator windings each coil of which being located around a stator pole and having a magnetic axis directed axially parallel to the shaft of the permanent magnet rotor,
wherein the permanent magnet pole-modules comprise, at least in their outmost regions in the axial direction, structures consisting of parts that are electrically insulated from each other so as to reduce eddy currents in the outmost regions in the axial direction, and each of the permanent magnet pole-modules comprises a first block made of permanent magnet material, a ferromagnetic center block, and a second block made of permanent magnet material sandwiched in the axial direction so that the ferromagnetic center block is between the first and second blocks.

The mobile working machine comprises preferably a liquid cooling system arranged to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

A number of exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figure 1 a shows a section view of an axial flux electrical machine according to an embodiment of the invention,
figure 1b shows a permanent magnet rotor according to an embodiment of the invention seen from the axial direction,
figure 2 shows a section view of an axial flux electrical machine according to an embodiment of the invention, and
figure 3 shows an illustration of a mobile working machine according to an embodiment of the invention.

### Description of the embodiments

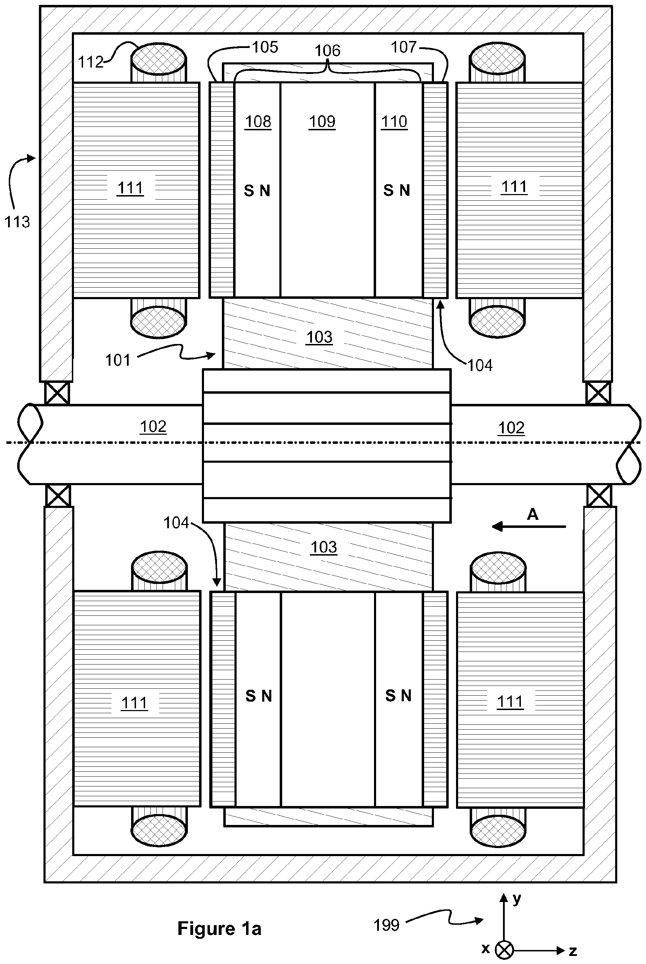

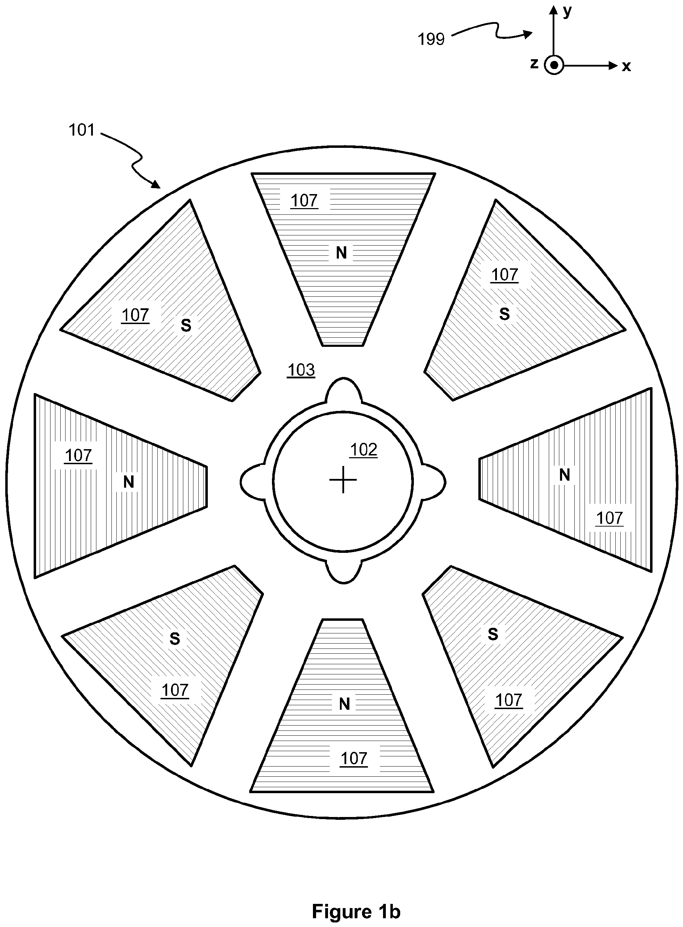

Figure 1 a shows a section view of an axial flux electrical machine according to an exemplifying embodiment of the invention. In figure 1a, the positive and negative z-directions of a coordinate system 199 represent the axial direction. The axial flux electrical machine comprises a stator 113 and a permanent magnet rotor 101. The stator comprises a stator core 111 and concentrated stator windings 112. Each coil of the stator windings is located around a salient stator pole and has an axially directed magnetic axis. Figure 1b shows the permanent magnet rotor 101 seen along the arrow A shown in figure 1 a. The permanent magnet rotor 101 comprises a shaft 102, a body 103 made of electrically non-conductive material and connected to the shaft, and permanent magnet pole-modules 104 attached to the body. Each of the permanent magnet pole-modules 104 has an axis of magnetization in the positive or negative z-direction parallel to the shaft 102. The body 103 can be made of, for example, fiber reinforced plastics. Each of the permanent magnet pole-modules comprises a first ferromagnetic layer 105, a permanent magnet core-part 106, and a second ferromagnetic layer 107 sandwiched in the axial direction so that the permanent magnet core-part is between the first and second ferromagnetic layers. In figures 1 a and 1 b "N" means the north poles of the permanent magnets and "S" means the south poles of the permanent magnets. The first and second ferromagnetic layers 105 and 107 are composed of ferromagnetic parts that are electrically insulated from each other in order to reduce eddy currents caused by magnetic flux variations in the first and second ferromagnetic layers. The first and second ferromagnetic layers 105 and 107 can be, for example, stacks of insulated steel sheets which are stacked in a direction perpendicular to the shaft. In the exemplifying case shown in figures 1 a and 1 b, the insulated steel sheets are stacked in the radial direction but, as well, the insulated steel sheets could be stacked for example in the tangential direction. Furthermore, the first and second ferromagnetic layers 105 and 107 can be made of ferrite or iron powder composites such as SOMALOY^{®} (Soft Magnetic Composite). The salient poles of the stator core 111 cause relatively strong harmonics to the magnetic flux density distribution in the air-gap between the stator and the rotor, but the losses caused by these harmonics are reduced because the body of the rotor is made of electrically non-conductive material and because, from the viewpoint of the harmonics, the permanents magnets are located behind the first and second ferromagnetic layers made of parts that are electrically insulated from each other.

In a permanent magnet rotor according to an embodiment of the invention, the permanent magnet core-part 106 comprises a first block 108 made of permanent magnet material, a ferromagnetic center block 109, and a second block 110 made of the permanent magnet material. These blocks are sandwiched in the axial direction so that the ferromagnetic center block is between the first and second blocks made of the permanent magnet material. The ferromagnetic center block 109 can be made of, for example, solid steel.

In a permanent magnet rotor according to an embodiment of the invention, the axial thicknesses of the first and second ferromagnetic 105 and 107 layers are greater than or equal to 4 mm and advantageously on the range 4 - 8 mm.

The axial flux electrical machine shown in figure 1 a has two stator elements that are opposed to each other with the permanent magnet rotor interposed therebetween. It is also possible that an axial flux electrical machine according to an embodiment of the invention has a stator core only on one side of the rotor in which case the ferromagnetic layers covering the permanent magnet core-parts on the other side of the rotor are arranged to extend over several permanent magnet pole-modules so as to form yokes between the respective permanent magnet core-parts.

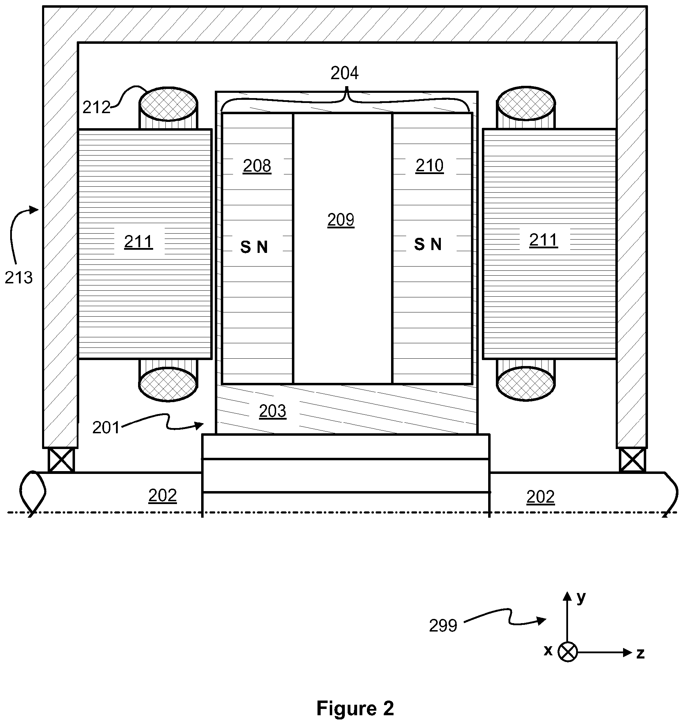

Figure 2 shows a section view of an axial flux electrical machine according to an exemplifying embodiment of the invention. In figure 2, the positive and negative z-directions of a coordinate system 299 represent the axial direction. Only an upper half of the electrical machine is shown in figure 2. The axial flux electrical machine comprises a stator 213 and a permanent magnet rotor 201. The stator comprises a stator core 211 and concentrated stator windings 212. Each coil of the stator windings is located around a salient stator pole and has an axially directed magnetic axis. The permanent magnet rotor 201 comprises a shaft 202, a body 203 made of electrically non-conductive material and connected to the shaft, and permanent magnet pole-modules 204 attached to the body. Each of the permanent magnet pole-modules 204 has an axis of magnetization in the positive or negative z-direction parallel to the shaft 202. The body 203 can be made of, for example, fiber reinforced plastics. Each of the permanent magnet pole-modules comprises permanent magnets 208 and 210, and a ferromagnetic center block 209. In figure 2 "N" means the north poles of the permanent magnets and "S" means the south poles of the permanent magnets. The permanent magnets 208 and 209 are composed of pieces of permanent magnet material that are electrically insulated from each other in order to reduce eddy currents caused by magnetic flux variations in the permanent magnets. The permanent magnets 208 and 209 can be, for example, stacks of insulated slices of permanent magnet material which are stacked in a direction perpendicular to the shaft. In the exemplifying case shown in figure 2, the insulated slices are stacked in the radial direction but, as well, the insulated slices could be stacked for example in the tangential direction. The salient poles of the stator core 211 cause relatively strong harmonics to the magnetic flux density distribution in the air-gap between the stator and the rotor, but the losses caused by these harmonics are reduced because the body of the rotor is made of electrically non-conductive material and because the permanent magnets are composed of insulated pieces of permanent magnet material.

In the exemplifying embodiment of the invention illustrated in figure 2, the body 203 and the permanent magnet pole-modules 204 are shaped so as to lock the permanent magnet pole-modules to the body. In this exemplifying case, the body comprises closed cavities for the permanent magnet pole-modules. However, many different shapes are possible for obtaining the locking effect. The body can be composed of two halves that are joined together in the axial direction, or alternatively the body can be cast around the permanent magnet pole-modules.

The axial flux electrical machine shown in figure 2 has two stator elements that are opposed to each other with the permanent magnet rotor interposed therebetween. It is also possible that there is a stator core only on one side of the rotor in which case the rotor comprises yokes between relevant permanent magnet pole-modules on the other side.

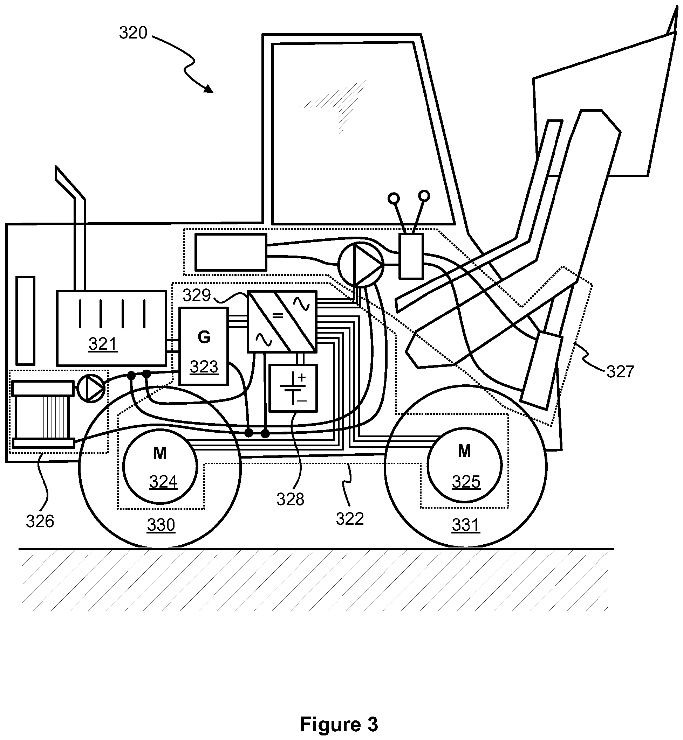

Figure 3 shows an illustration of a mobile working machine 320 according to an embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 321 that can be e.g. a diesel engine, an Otto-cycle engine, or a turbine engine. The mobile working machine comprises an electromechanical power transmission chain 322 between the combustion engine and wheels 330, 331 of the mobile working machine. The electromechanical transmission chain comprises a generator 323 the rotor of which is connected to the shaft of the combustion engine. The electromechanical transmission chain comprises a frequency converter 329 and electrical motors 324, 325 at the hubs of the wheels of the mobile working machine. The frequency converter 329 is arranged to convert the electrical voltage produced by the generator 323 into electrical voltages having amplitudes and frequencies suitable for the electrical motors 324, 325. The frequency converter may have separate output stages for all the electrical motors 324, 325 in which case each electrical motor can be controlled individually, or all the electrical motors 324, 325 can be connected to one and the same output stage of the frequency converter in which case the electrical motors are controlled as a group. The electrical motors 324, 325 are axial flux electrical machines each of which comprises:
- a rotor comprising a shaft, a body made of electrically non-conductive material and connected to the shaft, and permanent magnet pole-modules each of which being attached to the body and having an axis of magnetization in an axial direction parallel to the shaft, and
- a stator having concentrated stator windings each coil of which being located around a salient stator pole and having a magnetic axis directed axially parallel to the shaft of the rotor.

The permanent magnet pole-modules of the rotor comprise, at least in their outmost regions in the axial direction, structures consisting of parts that are electrically insulated from each other so as to reduce eddy currents in the outmost regions in the axial direction. For example, each permanent magnet pole-module may comprise a first ferromagnetic layer, a permanent magnet core-part, and a second ferromagnetic layer sandwiched in the axial direction so that the permanent magnet core-part is between the first and second ferromagnetic layers, where the first and second ferromagnetic layers comprise ferromagnetic parts that are electrically insulated from each other. For another example, permanent magnets of the permanent magnet pole-modules can be composed of electrically insulated pieces of permanent magnet material stacked in a direction perpendicular to the shaft, in which case the permanent magnets represent the structures consisting of parts that are electrically insulated from each other.

In a mobile working machine according to an embodiment of the invention, also the generator 323 is an axial flux electrical machine of the kind described above. It is also possible that only the generator 323 is an axial flux electrical machine of the kind described above, and the electrical motors 324, 325 are electrical machines of some other kind.

A mobile working machine according to an embodiment of the invention comprises a liquid cooling system 326 arranged to cool the electromechanical power transmission chain 322.

A mobile working machine according to an embodiment of the invention comprises a liquid cooling system arranged to cool both a hydraulic system 327 of the mobile working machine and the electromechanical power transmission chain 322.

A mobile working machine according to an embodiment of the invention comprises a liquid cooling system arranged to cool both the electromechanical power transmission chain 322 and the combustion engine 321.

In a mobile working machine according to an embodiment of the invention, the electromechanical power transmission chain comprises a battery 328 arranged to respond to peak power needs exceeding the maximum power of the combustion engine 321. The battery can be connected, for example, to a direct voltage intermediate circuit of the frequency converter 329.

## Claims

1. A permanent magnet rotor (101, 201) for an axial flux electrical machine of a mobile working machine, the permanent magnet rotor comprising:
- a shaft (102, 202),
- a body (103, 203) made of electrically non-conductive material and connected to the shaft, and
- permanent magnet pole-modules (104, 204) each of which being attached to the body, having an axis of magnetization in an axial direction parallel to the shaft, and comprising, at least in outmost regions in the axial direction, structures consisting of parts that are electrically insulated from each other so as to reduce eddy currents in the outmost regions in the axial direction,
**characterized in that** each of the permanent magnet pole-modules comprises a first block (108, 208) made of permanent magnet material, a ferromagnetic center block (109, 209), and a second block (110, 210) made of permanent magnet material sandwiched in the axial direction so that the ferromagnetic center block is between the first and second blocks.

2. A permanent magnet rotor according to claim 1, wherein each of the permanent magnet pole-modules further comprises a first ferromagnetic layer (105) and a second ferromagnetic layer (107) so that the first block (108), the ferromagnetic center block (109) and the second block (110) are between the first and second ferromagnetic layers, and the first and second ferromagnetic layers comprise ferromagnetic parts that are electrically insulated from each other, the first and the second ferromagnetic layers representing the structures consisting of parts that are electrically insulated from each other.

3. A permanent magnet rotor according to claim 2, wherein the first and second ferromagnetic layers are stacks of insulated steel sheets which are stacked in a direction perpendicular to the shaft.

4. A permanent magnet rotor according to claim 2, wherein the first and second ferromagnetic layers are made of iron powder composite.

5. A permanent magnet rotor according to claim 4, wherein the iron powder composite is ferrite.

6. A permanent magnet rotor according to any of claims 1-5, wherein axial thicknesses of the first and second ferromagnetic layers are at least 4 mm.

7. A permanent magnet rotor according to claim 1, wherein permanent magnets (208, 210) of the permanent magnet pole-modules are composed of electrically insulated pieces of permanent magnet material stacked in a direction perpendicular to the shaft, the permanent magnets representing the structures consisting of parts that are electrically insulated from each other.

8. A permanent magnet rotor according to any of claims 1-7, wherein the body (203) and the permanent magnet pole-modules (204) are shaped to lock the permanent magnet pole-modules to the body.

9. A permanent magnet rotor according to claim 8, wherein the body is composed of two halves joined together in the axial direction.

10. A permanent magnet rotor according to claim 8, wherein the body has been cast around the permanent magnet pole-modules.

11. An axial flux electrical machine for a mobile working machine, the axial flux electrical machine comprising:
- a permanent magnet rotor (101) according to any of claims 1-10, and
- a stator (113) having a stator core (111) and concentrated stator windings (112) each coil of which being located around a stator pole and having a magnetic axis directed axially parallel to the shaft of the permanent magnet rotor.

12. A mobile working machine (320) comprising:
- a combustion engine (321), and
- an electromechanical power transmission chain (322) between the combustion engine and one or more wheels (330, 331) of the mobile working machine,
wherein the electromechanical transmission chain comprises at least one axial flux electrical machine (323-325) according to claim 11.

13. A mobile working machine according to claim 12, wherein the mobile working machine comprises a liquid cooling system (326) arranged to cool the electromechanical power transmission chain.

14. A mobile working machine according to claim 13, wherein the liquid cooling system is arranged to cool both the electromechanical power transmission chain and a hydraulic system (327) of the mobile working machine.

15. A mobile working machine according to claim 13, wherein the liquid cooling system is arranged to cool both the electromechanical power transmission chain and the combustion engine.

16. A mobile working machine according to any of claims 12-15, wherein the electromechanical power transmission chain comprises a battery (328) arranged to respond to peak power needs exceeding the maximum power of the combustion engine.

## Patentansprüche

1. Permanentmagnetrotor (101, 201) für eine elektrische Axialflussmaschine einer mobilen Arbeitsmaschine, wobei der Permanentmagnetrotor umfasst:
- eine Welle (102, 202),
- einen Körper (103, 203), welcher aus elektrisch nicht-leitfähigem Material hergestellt und mit der Welle verbunden ist, und
- Permanentmagnet-Polmodule (104, 204), von welchen jedes an dem Körper angebracht ist, welche in einer axialen Richtung parallel zu der Welle eine Magnetisierungsachse aufweisen und welche wenigstens in äußersten Bereichen in der axialen Richtung Strukturen umfassen, welche aus Teilen bestehen, welche elektrisch voneinander isoliert sind, um Wirbelströme in den äußersten Bereichen in der axialen Richtung zu verringern,
**dadurch gekennzeichnet, dass** jedes der Permanentmagnet-Polmodule einen aus Permanentmagnetmaterial hergestellten ersten Block (108, 208), einen ferromagnetischen Zentralblock (109, 209) und einen aus Permanentmagnetmaterial hergestellten zweiten Block (110, 210) umfasst, welche sandwichartig in der axialen Richtung angeordnet sind, so dass der ferromagnetische Zentralblock zwischen dem ersten und dem zweiten Block liegt.

2. Permanentmagnetrotor nach Anspruch 1, wobei jedes der Permanentmagnet-Polmodule ferner eine erste ferromagnetische Schicht (105) und eine zweite ferromagnetische Schicht (107) umfasst, so dass der erste Block (108), der ferromagnetische Zentralblock (109) und der zweite Block (110) zwischen der ersten und der zweiten ferromagnetischen Schicht liegen, und die erste und die zweite ferromagnetische Schicht ferromagnetische Teile umfassen, welche elektrisch voneinander isoliert sind, wobei die erste und die zweite ferromagnetische Schicht die Strukturen darstellen, welche aus Teilen bestehen, welche elektrisch voneinander isoliert sind.

3. Permanentmagnetrotor nach Anspruch 2, wobei die erste und die zweite ferromagnetische Schicht Stapel aus isolierten Stahlblechen sind, welche in einer zu der Welle lotrechten Richtung gestapelt sind.

4. Permanentmagnetrotor nach Anspruch 2, wobei die erste und die zweite ferromagnetische Schicht aus einem Eisenpulver-Verbundwerkstoff hergestellt sind.

5. Permanentmagnetrotor nach Anspruch 4, wobei der Eisenpulver-Verbundwerkstoff ferritisch ist.

6. Permanentmagnetrotor nach einem der Ansprüche 1-5, wobei axiale Dicken der ersten und der zweiten ferromagnetischen Schicht wenigstens 4 mm betragen.

7. Permanentmagnetrotor nach Anspruch 1, wobei Permanentmagnete (208, 210) der Permanentmagnet-Polmodule aus elektrisch isolierten Stücken eines Permanentmagnetmaterials gebildet sind, welche in einer zu der Welle lotrechten Richtung gestapelt sind, wobei die Permanentmagnete die Strukturen darstellen, welche aus Teilen bestehen, welche elektrisch voneinander isoliert sind.

8. Permanentmagnetrotor nach einem der Ansprüche 1-7, wobei der Körper (203) und die Permanentmagnet-Polmodule (204) ausgebildet sind, um die Permanentmagnet-Polmodule an dem Köper zu sichern.

9. Permanentmagnetrotor nach Anspruch 8, wobei der Körper aus zwei Hälften gebildet ist, welche in der axialen Richtung miteinander verbunden sind.

10. Permanentmagnetrotor nach Anspruch 8, wobei der Körper um die Permanentmagnet-Polmodule gegossen worden ist.

11. Elektrische Axialflussmaschine für eine mobile Arbeitsmaschine, wobei die elektrische Axialflussmaschine umfasst:
- einen Permanentmagnetrotor (101) nach einem der Ansprüche 1-10, und
- einen Stator (113), welcher einen Statorkern (111) und konzentrierte Statorwindungen (112) aufweist, von welchen jede Spule um einen Statorpol angeordnet ist und eine Magnetachse aufweist, welche axial parallel zu der Welle des Permanentmagnetrotors ausgerichtet ist.

12. Mobile Arbeitsmaschine (320), umfassend:
- einen Verbrennungsmotor (321), und
- eine elektromechanische Kraftübertragungskette (322) zwischen dem Verbrennungsmotor und einem oder mehreren Rädern (330, 331) der mobilen Arbeitsmaschine,
wobei die elektromechanische Übertragungskette wenigstens eine elektrische Axialflussmaschine (323-325) nach Anspruch 11 umfasst.

13. Mobile Arbeitsmaschine nach Anspruch 12, wobei die mobile Arbeitsmaschine ein Flüssigkeitskühlsystem (326) umfasst, welches eingerichtet ist, um die elektromechanische Kraftübertragungskette zu kühlen.

14. Mobile Arbeitsmaschine nach Anspruch 13, wobei das Flüssigkeitskühlsystem eingerichtet ist, um sowohl die elektromechanische Kraftübertragungskette als auch ein Hydrauliksystem (327) der mobilen Arbeitsmaschine zu kühlen.

15. Mobile Arbeitsmaschine nach Anspruch 13, wobei das Flüssigkeitskühlsystem eingerichtet ist, um sowohl die elektromechanische Kraftübertragungskette als auch den Verbrennungsmotor zu kühlen.

16. Mobile Arbeitsmaschine nach einem der Ansprüche 12-15, wobei die elektromechanische Kraftübertragungskette eine Batterie (328) umfasst, welche eingerichtet ist, um auf Spitzenleistungserfordernisse zu reagieren, welche die Maximalleistung des Verbrennungsmotors überschreiten.

## Revendications

1. Rotor à aimant permanent (101, 201) pour une machine électrique à flux axial d'une machine de travail mobile, le rotor à aimant permanent comprenant :
- un arbre (102, 202),
- un corps (103, 203) composé d'un matériau électriquement non conducteur et raccordé à l'arbre, et
- des modules polaires à aimant permanent (104, 204), chacun d'entre eux étant fixé au corps, comprenant un axe de magnétisation dans une direction axiale parallèle à l'arbre, et comprenant, au moins dans des régions les plus externes dans la direction axiale, des structures composées de parties qui sont électriquement isolées les unes des autres de manière à réduire des courants de Foucault dans les régions les plus externes dans la direction axiale,
**caractérisé en ce que** chacun des modules polaires à aimant permanent comprend un premier bloc (108, 208) composé d'un matériau d'aimant permanent, un bloc central ferromagnétique (109, 209), et un second bloc (110, 210) composé d'un matériau d'aimant permanent intercalé dans la direction axiale de sorte que le bloc central ferromagnétique soit entre les premier et second blocs.

2. Rotor à aimant permanent selon la revendication 1, dans lequel chacun des modules polaires à aimant permanent comprend en outre une première couche ferromagnétique (105) et une seconde couche ferromagnétique (107) de sorte que le premier bloc (108), le bloc central ferromagnétique (109) et le second bloc (110) soient entre les première et seconde couches ferromagnétiques, et les première et seconde couches ferromagnétiques comprennent des parties ferromagnétiques qui sont électriquement isolées les unes des autres, les première et seconde couches ferromagnétiques représentant les structures composées de parties qui sont électriquement isolées les unes des autres.

3. Rotor à aimant permanent selon la revendication 2, dans lequel les première et seconde couches ferromagnétiques sont des piles de feuilles d'acier isolées qui sont empilées dans une direction perpendiculaire à l'arbre.

4. Rotor à aimant permanent selon la revendication 2, dans lequel les première et seconde couches ferromagnétiques sont composées d'un composite de poudre de fer.

5. Rotor à aimant permanent selon la revendication 4, dans lequel le composite de poudre de fer est de la ferrite.

6. Rotor à aimant permanent selon l'une quelconque des revendications 1-5, dans lequel les épaisseurs axiales des première et seconde couches ferromagnétiques sont d'au moins 4 mm.

7. Rotor à aimant permanent selon la revendication 1, dans lequel des aimants permanents (208, 210) des modules polaires à aimant permanent sont composés de pièces électriquement isolées de matériau d'aimant permanent empilées dans une direction perpendiculaire à l'arbre, les aimants permanents représentant les structures composées de parties qui sont électriquement isolées les unes des autres.

8. Rotor à aimant permanent selon l'une quelconque des revendications 1-7, dans lequel le corps (203) et les modules polaires à aimant permanent (204) sont formés pour verrouiller les modules polaires à aimant permanent sur le corps.

9. Rotor à aimant permanent selon la revendication 8, dans lequel le corps est composé de deux moitiés raccordées l'une à l'autre dans la direction axiale.

10. Rotor à aimant permanent selon la revendication 8, dans lequel le corps a été coulé autour des modules polaires à aimant permanent.

11. Machine électrique à flux axial pour une machine de travail mobile, la machine électrique à flux axial comprenant :
- un rotor à aimant permanent (10) selon l'une quelconque des revendications 1-10, et
- un stator (113) comprenant un noyau de stator (111) et des enroulements de stator concentrés (112), chaque enroulement étant situé autour d'un pôle de stator et comprenant un axe magnétique dirigé axialement parallèle à l'arbre du rotor à aimant permanent.

12. Machine de travail mobile (320) comprenant :
- un moteur à combustion (321), et
- une chaîne de transmission de puissance électromécanique (322) entre le moteur à combustion et une ou plusieurs roues (330, 331) de la machine de travail mobile,
dans laquelle la chaîne de transmission électromécanique comprend au moins une machine électrique à flux axial (323-325) selon la revendication 11.

13. Machine de travail mobile selon la revendication 12, dans laquelle la machine de travail mobile comprend un système de refroidissement par liquide (326) conçu pour refroidir la chaîne de transmission de puissance électromécanique.

14. Machine de travail mobile selon la revendication 13, dans laquelle le système de refroidissement par liquide est conçu pour refroidir à la fois la chaîne de transmission de puissance électromécanique et un système hydraulique (327) de la machine de travail mobile.

15. Machine de travail mobile selon la revendication 13, dans laquelle le système de refroidissement par liquide est conçu pour refroidir à la fois la chaîne de transmission de puissance électromécanique et le moteur à combustion.

16. Machine de travail mobile selon l'une quelconque des revendications 12-15, dans laquelle la chaîne de transmission de puissance électromécanique comprend une batterie (328) conçue pour répondre à des besoins de puissance de crête dépassant la puissance maximale du moteur à combustion.
